# EUROPÄISCHE PATENTSCHRIFT

(11) **EP 1 277 612 B1**
(45) Veröffentlichungstag und Bekanntmachung des Hinweises auf die Patenterteilung: **28.11.2007**
(21) Anmeldenummer: 02013344.3
(22) Anmeldetag: 19.06.2002
(51) Int. Cl.: B60N 2/66, A47C 7/46

(54) **Sitz für Automobile oder dergleichen**
Seat for automobiles or the like
Siège pour automobiles ou équivalents

(30) Priorität: 20.07.2001 DE 10135473
(43) Veröffentlichungstag der Anmeldung: 22.01.2003
(73) Patentinhaber: ITW Automotive Products GmbH & Co. KG, 58636 Iserlohn (DE)
(72) Erfinder: Och, Roland, 97228 Rottendorf (DE); Fischer, Gerd, 97285 Röttingen (DE)
(74) Vertreter: Hauck Patent- und Rechtsanwälte

(56) Entgegenhaltungen:
- EP-A- 0 540 481
- WO-A-00/20249
- DE-A- 2 339 069
- DE-A- 19 850 121
- GB-A- 2 316 459
- US-A- 5 954 399

## Beschreibung

Die Erfindung bezieht sich auf einen Sitz für Automobile, insbesondere mit einem verstellbaren Mittel in der Lehne im Bereich der Lendenwirbel nach dem Patentanspruch 1.

Bei Rückenlehnen von Sitzen, z.B. Autositzen, Bürostühlen und Sesseln besteht das Bedürfnis, den Lordosenbereich in seiner Härte und Kontur dosiert einzustellen, um die anatomisch korrekte Krümmung der Wirbelsäule auch bei längerem Sitzen wirkungsvoll zu unterstützen. Dabei sollte die Position unter Umständen auch in der Höhe einstellbar sein, um zum Beispiel bei einem größeren Menschen, bei dem sich der Lordosenbereich etwas weiter oben befindet, die Kontur oder Härte eben dort einstellen zu können, während bei einem kleineren Menschen ein weiter unten liegender einstellbarer Bereich wählbar ist.

Aus DE 199 24 591 ist eine Vorrichtung zur Polsterunterstützung für eine Rückenlehne eines Sitzes bekannt geworden, bei der im Lordosenbereich eine Anzahl länglicher Biegefederelemente vorgesehen ist, die sich quer zur Lehne erstrecken und eine Polsterunterstützung bilden. Der Längsträger ist in einer Richtung verformbar, welche senkrecht zum Längsträger ist. Eine Verstellvorrichtung am Längsträger ermöglicht, dass das Federelement im Bereich des Längsträgers bewegbar ist, so daß sich die Form der Polsterunterstützungsfläche verändert. Aus der genannten Schrift ist ferner bekannt, mindestens ein sich federnd abstützendes Element vorzusehen, das in Richtung auf die Sitz- und/oder Lehnenfläche hin und von dieser fortbewegbar gelagert ist. Eine teleskopisch aufgebaute Verstellvorrichtung, die mindestens zwei ineinander genestete Zylinderhülsen aufweist, die über Gewindeabschnitte derart zusammenwirken, daß bei einer Drehung der äußeren Hülse die innere in Richtung der gemeinsamen Achse verstellt wird, wobei die äußere Hülse drehbar aber axial gesichert ist, dient zur Betätigung des federnd abgestützten Elements. Die äußere Hülse der Verstellvorrichtung ist mit einem Drehantrieb in Verbindung.

Aus DE 23 39 069 ist ein Sitz für Fahrzeuge bekannt geworden, bei dem u.a. die Rücklehne durch eine Auswölbung im Lordosenbereich eine Unterstützung im Lendenwirbelbereich ermöglicht. Der ausgewölbte Bereich kann in zeitlichen Intervallen mehr oder weniger vorgewölbt werden. Dadurch soll ein abwechselndes Vergrößern und Verkleinern der Zwischenwirbelräume bewirkt werden, wodurch der Stoffwechsel der Bandscheiben und des diese umgebenden Gewebes verbessert werden soll.

Aus der Druckschrift GB 2 316 459 A ist ein Sitzverstellmechanismus zur Anpassung der Rückenlehne eines Autositzes bekannt. Bei dem bekannten Sitzverstellmechanismus ist im Rahmen der Lehne ein flexibles Gitter angeordnet, das an beiden Seiten über Verbindungsdrähte aufgehängt ist, die seitliche Schienen des Gitters mit dem Rahmen der Lehne verbinden. An der Lehne befindet sich ein Betätigungsmechanismus, der zwei Zugseile betätigt. Die Zugseile sind in Bowdenzügen geführt, deren Hüllen sich jeweils an einem Widerlager an einer seitlichen Schiene des Gitters abstützen. Das freie Ende jedes Zugseils ist am Rahmen der Lehne fixiert. Durch Verkürzen der Länge der Zugseile mit dem Betätigungsmechanismus kann die Position des Gitters nach vom verstellt werden.

Aus der Druckschrift WO 00/20249 ist ein ähnlicher Sitz bekannt. Auch bei diesem bekannten Sitz wird ein in dem Rahmen aufgehängtes Gitter über Zugseile verstellt.

Eine weitere Rückenlehne für einen Autositz ist aus der Druckschrift EP 0 540 481 A1 bekannt. Diese bekannte Rückenlehne weist im Bereich der Lendenwirbelsäule ein schmetterlings- oder sanduhrförmiges Stützelement auf, das seitlich an zwei Federn im Rahmen der Rückenlehne aufgehängt ist. Das Stützelement besteht aus einem steifen Material und kann über zwei Zugseile nach vorn bewegt werden.

Der Erfindung liegt die Aufgabe zugrunde, einen Sitz, insbesondere für Automobile zu schaffen mit einer Polsterunterstützung, welche einfach aufgebaut und einbaubar ist und mit einfachen Mitteln in ihrer Lage verändert werden kann.

Diese Aufgabe wird durch die Merkmale des Patentanspruchs 1 gelöst.

Bei der Erfindung ist ein längliches biegeelastisches Element vorgesehen, das sich quer in der Lehne erstreckt, und zwar im Lordosenbereich der sitzenden Person. Das längliche biegeelastische Element erstreckt sich über die gesamte Breite der Lehne bzw. des Lehnenrahmens. Das längliche Element kann aus einem geeigneten Kunststoff einteilig hergestellt werden. Es kann jedoch auch bei einer anderen Ausgestaltung aus Federstahl bestehen, das mit einem Kunststoffmaterial umspritzt ist.

In den Endbereichen ist das längliche Element mit zwei Bowdenzügen verbunden. Bowdenzüge oder Kabelzüge bestehen bekanntlich aus einem Zugseil, das innerhalb einer Hülle geführt ist. Bei der Erfindung ist das eine Ende des Zugseils der Bowdenzüge mit einer Betätigungsvorrichtung verbunden, die vorzugsweise an der Lehne angebracht ist und am anderen Ende am Lehnenrahmen befestigt. Die Bowdenzughülle stützt sich an einem Widerlager des länglichen Elements ab, durch welches das Zugseil längsbeweglich hindurchgeführt ist. Bei der Ausübung eines Zuges auf die Zugseile wird mithin das längliche Element gegenüber dem Lehnenrahmen bewegt. Bei einer entsprechenden Anbindung der Zugseile am Lehnenrahmen kann auf diese Weise das längliche Element nach vom verstellt werden, wobei das Ausmaß dieser Verstellung vom Verstellweg der Betätigungsvorrichtung abhängt. Vorzugsweise sind die Zugseile in Sitzrichtung gesehen vor dem länglichen Element am Lehnenrahmen, d.h. insbesondere an den seitlichen Rahmenabschnitten angebunden. Auf diese Weise ist das längliche Element am Lehnenrahmen verstellbar aufgehängt.

Die Ausübung des Zuges auf die Zugseile kann durch eine manuelle Betätigung erfolgen, beispielsweise mit Hilfe eines Handrades oder eines Hebels, der z.B. über eine Kulissenführung, eine Spindel oder dergleichen eine Zugbewegung erzeugt. Es ist auch eine Art Winde mit Blockierung denkbar. Alternativ zu einer manuellen Betätigung ist auch eine elektrisch angetriebene Zugvorrichtung denkbar, die in die Lehne eingebaut wird.

Nach einer Ausgestaltung der Erfindung erfolgt die Anbindung der Zugseile am Lehnenrahmen über eine Feder.

Nach einer anderen Ausgestaltung der Erfindung ist das längliche Element in der Lehne höhenverstellbar gelagert und mittels einer zweiten Betätigungsvorrichtung in seiner Höhe einstellbar. Hierdurch kann eine Anpassung an den Lordosenbereich der Sitzperson vorgenommen werden.

Es versteht sich, daß auch eine periodische Betätigung des länglichen Elements mit Hilfe eines geeigneten automatischen Antriebs möglich ist, um eine massierende Einwirkung auf die Wirbelsäule und den die Wirbelsäule umgebenden Lendenbereich der Sitzperson zu erzeugen.

Es ist üblich, in Lehnen von Kraftfahrzeugsitzen eine flexible Matte oder ein flexibles Gitter in die Lehne einzubauen. Das längliche Element ist an einem derartigen Gitter oder einer derartigen Matte im Rahmen angehängt.

Ein Ausführungsbeispiel der Erfindung wird nachfolgend anhand von Zeichnungen näher erläutert.
- Fig. 1: zeigt schematisch perspektivisch eine Rückenlehne mit einer Vorrichtung nach der Erfindung.
- Fig. 2: zeigt schematisch einen Horizontalschnitt durch die Rückenlehne nach Fig. 1.

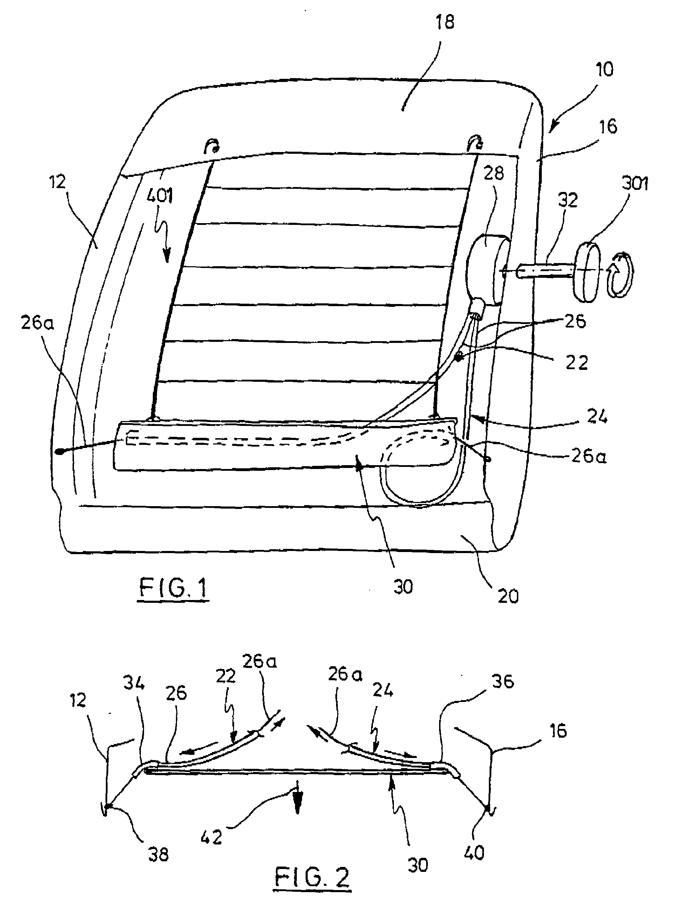

In Fig. 1 ist ein Rahmen 10 einer Rückenlehne eines Sitzes für ein Automobil angedeutet mit den seitlichen Holmen 12, 16 und der oberen Traverse 18 und der unteren Traverse 20. Im unteren Bereich des Rahmens 10 erstreckt sich nahezu über den Abstand der Holme 12, 16 ein flaches biegeelastisches Element 30 von relativ geringer Höhe. Es besteht einteilig aus einem Kunststoffmaterial oder aus einem Federstahl, der mit Kunststoff ummantelt ist. Das biegeelastische Element 30 kann irgendeine gewünschte Kontur haben, beispielsweise in Abständen Verbreiterungen aufweisen. Dies ist im einzelnen nicht dargestellt. Die Höhenlage des elastischen Elements 30 ist derart, daß sich eine Person auf der nicht gezeigten Sitzfläche sitzend mit ihrem Lendenwirbelbereich im Bereich des länglichen Elements 30 befindet.

In Fig. 1 erkennt man ferner zwei Bowdenzüge 22, 24, welche eine Umhüllung 26 und ein Zugseil 26a aufweisen, wie an sich bekannt. An der Innenseites des Holmes 16 ist eine nicht näher dargestellte Betätigungsvorrichtung 28 angebracht, welche über ein Handrad 301, das über eine Welle 32 mit der Betätigungsvorrichtung 28 verbunden ist, auf die Bowdenzüge 22, 24 wirkt.

Wie sich aus Fig. 2 ergibt, ist in den Endbereichen des elastischen Elements 30 jeweils ein Widerlager 34, 36 angebracht. Das Zugseil 26a der Bowdenzüge 22, 24 erstreckt sich längsbeweglich durch die Widerlager 34 bzw. 36, während sich die Hülle 26 am Widerlager 34 bzw. 36 abstützt. Das freie Ende des Zugseils 26a ist bei 38 bzw. 40 am Holm 12 bzw. 16 angebunden. Diese Anbindung kann unter Zwischenschaltung einer zugelastischen Feder vorgesehen sein, was jedoch nicht dargestellt ist. Wie aus Fig. 2 ferner zu erkennen, liegen die Anbindepunkte 38, 40 für das Zugseil 26a zur Lehnenvorderseite bzw. zur Sitzfläche hin. Das längliche Element 30 ist mithin über die Bowdenzüge 22, 24 aufgehängt.

Eine flexible Matte oder ein Gitter 401 ist zwischen den Traversen 18, 20 angeordnet, an der oberen Traverse 18 befestigt und mit der unteren Seite am länglichen Element 30 angebracht.

Wird mit Hilfe des Handrads 301 und der Betätigungsvorrichtung 28 eine Zugkraft auf die Zugseile 26a ausgeübt, wird dadurch das längliche Element 30 parallel zu sich selbst nach vorn verstellt in Richtung Pfeil 42 (Fig. 2).

Mit Hilfe der manuellen Verstellung läßt sich mithin die Lage des biegeelastischen länglichen Elements 30 nach vorn bzw. nach hinten in gewünschter Weise verstellen. Darüber hinaus kann auch eine Verstellmöglichkeit in Höhenrichtung vorgesehen sein (nicht gezeigt), um eine Anpassung an die Größe der Sitzperson zu erhalten.

In der Betätigungsvorrichtung 28 ist eine geeignete Vorkehrung vorgesehen, welche bei einer Drehung des Handrads 301 diese in eine translatorische Bewegung umsetzt. Dies kann mit Hilfe einer Winde, einer geeigneten Exzentrizität oder auf sonstige Art und Weise erfolgen. Es versteht sich, daß die Betätigung auch motorisch erfolgen kann.

## Patentansprüche

1. Sitz für Automobile oder dergleichen mit einer einen Rahmen (10) aufweisenden Lehne und einer flexiblen Matte (401) oder einem flexiblen Gitter in dem Rahmen, wobei der Sitz folgende Merkmale aufweist:
- zwei Bowdenzüge (22, 24) mit je einer Hülle (26) und einem Zugseil (26a),
- eine Betätigungsvorrichtung (28, 301) an der Lehne (10) zur Ausübung eines Zuges auf die Zugseile (26a),
- jeweils ein Widerlager (34, 36) für eine Bowdenzughülle (26), durch welche das Zugseil (26a) längsbeweglich hindurchgeführt ist und
- eine Befestigung (38, 40) des freien Endes des Zugseils (26a) an einem zugekehrten Teil des Lehnenrahmens,**gekennzeichnet durch**
- ein längliches, biegeelastisches, sich quer im Rahmen (10) erstreckendes Element (30), das im Lordosenbereich einer sitzenden Person angeordnet ist, in dessen Endbereichen jeweils eines der Widerlager (34, 36) angeordnet ist,
- wodurch das längliche Element (30) bei einer Zugkraft an dem Zugseil (26a) nach vom bewegt wird,
- wobei die flexible Matte (401) oder das flexible Gitter an einer oberen Traverse (18) des Rahmens (10) befestigt und mit der unteren Seite aus länglichen Element (30) angebrackt ist.

2. Sitz nach Anspruch 1, **dadurch gekennzeichnet, daß** die Anbindung (38, 40) der Zugseile (26a) am Rahmen (10) in Sitzrichtung vor dem länglichen Element (30) liegt.

3. Sitz nach Anspruch 1 oder 2, **dadurch gekennzeichnet, daß** die Anbindung der Zugseile (26a) über eine Feder erfolgt.

4. Sitz nach einem der Ansprüche 1 bis 3, **dadurch gekennzeichnet, daß** das längliche Element (30) einteilig aus Kunststoff geformt ist.

5. Sitz nach einem der Ansprüche 1 bis 3, **dadurch gekennzeichnet, daß** das längliche Element (30) aus Federstahl besteht, das mit Kunststoff ummantelt ist.

6. Sitz nach einem der Ansprüche 1 bis 5, **dadurch gekennzeichnet, daß** die Bowdenzüge (22, 24) zu einer gemeinsamen Betätigungsvorrichtung (28, 301) an der Lehne (10) geführt sind.

7. Sitz nach einem der Ansprüche 1 bis 6, **dadurch gekennzeichnet, daß** das längliche Element (30) in der Lehne höhenverstellbar gelagert und mittels einer zweiten Betätigungsvorrichtung in seiner Höhe einstellbar ist.

## Claims

1. Seat for automobiles or the like, with a backrest which has a frame (10) and with a flexible mat (401) or a flexible lattice in the frame, the seat having the following features:
- two Bowden cables (22, 24) each with a sheath (26) and a traction cable (26a),
- an actuating device (28, 301) on the backrest (10) for exerting tension on the traction cables (26a),
- a respective abutment (34, 36) for a Bowden cable sheath (26) through which the traction cable (26a) is guided in a longitudinally movable manner, and
- a fastening (38, 40) of the free end of the traction cable (26a) to a facing part of the backrest frame, **characterized by**
- an elongate, flexurally elastic element (30) which extends transversely in the frame (10), is arranged in the lordosis region of a seated person and in the end regions of which one of the abutments (34, 36) is arranged in each case,
- as a result of which, when a tensile force is applied to the traction cable (26a), the elongate element (30) is moved forwards,
- the flexible mat (401) or the flexible lattice being fastened to an upper crosspiece (18) of the frame (10) and being attached at the lower side to the elongate element (30).

2. Seat according to Claim 1, **characterized in that** the connection (38, 40) of the traction cables (26a) to the frame (10) is located upstream of the elongate element (30) in the sitting direction.

3. Seat according to Claim 1 or 2, **characterized in that** the connection of the traction cables (26a) takes place via a spring.

4. Seat according to one of Claims 1 to 3, **characterized in that** the elongate element (30) is formed integrally from plastic.

5. Seat according to one of Claims 1 to 3, **characterized in that** the elongate element (30) is composed of spring steel which is encased by plastic.

6. Seat according to one of Claims 1 to 5, **characterized in that** the Bowden cables (22, 24) are guided to a common actuating device (28, 301) on the backrest (10).

7. Seat according to one of Claims 1 to 6, **characterized in that** the elongate element (30) is mounted height-adjustably in the backrest and its height can be set by means of a second actuating device.

## Revendications

1. Siège pour automobiles ou analogues, avec un dossier présentant un cadre (10) et un tapis flexible (401) ou une grille flexible dans le cadre, dans lequel le siège présente les caractéristiques suivantes :
- deux câbles Bowden (22, 24) chacun avec une gaine (26) et un câble de traction (26a),
- un dispositif d'actionnement (28, 301) sur le dossier (10) pour exercer une traction sur les câbles de traction (26a),
- chaque fois une butée (34, 36) pour une gaine de câble Bowden (26), à travers laquelle le câble de traction (26a) est guidé en mouvement longitudinal, et
- une fixation (38, 40) de l'extrémité libre du câble de traction (26a) sur une partie retournée du cadre de dossier,
**caractérisé par**
- un élément allongé (30), élastique en flexion et s'étendant transversalement dans le cadre (10), qui est disposé dans la région de lordose d'une personne assise, et dont les régions d'extrémité comportent chacune une butée (34, 36),
- par laquelle l'élément allongé (30) est déplacé vers l'avant sous une force de traction exercée sur le câble de traction (26a),
- dans lequel le tapis flexible (401) ou la grille flexible est fixé(e) à une traverse supérieure (18) du cadre (10) et est attaché(e) au côté inférieur de l'élément allongé (30).

2. Siège selon la revendication 1, **caractérisé en ce que** la liaison (38, 40) des câbles de traction (26a) au cadre (10) est située devant l'élément allongé (30) dans la direction du siège.

3. Siège selon la revendication 1 ou 2, **caractérisé en ce que** la liaison des câbles de traction (26a) est effectuée au moyen d'un ressort.

4. Siège selon l'une quelconque des revendications 1 à 3, **caractérisé en ce que** l'élément allongé (30) est formé d'une pièce en matière plastique.

5. Siège selon l'une quelconque des revendications 1 à 3, **caractérisé en ce que** l'élément allongé (30) est constitué d'acier à ressort, qui est gainé de matière plastique.

6. Siège selon l'une quelconque des revendications 1 à 5, **caractérisé en ce que** les câbles Bowden (22, 24) sont guidés vers un dispositif d'actionnement commun (28, 301) sur le dossier (10).

7. Siège selon l'une quelconque des revendications 1 à 6, **caractérisé en ce que** l'élément allongé (30) est réglable en hauteur dans le dossier et sa hauteur est réglable au moyen d'un deuxième dispositif d'actionnement.
